# EUROPEAN PATENT APPLICATION

(11) **EP 2 755 380 A1**
(43) Date of publication of application: **16.07.2014**
(21) Application number: 14151102.2
(22) Date of filing: 14.01.2014
(51) Int. Cl.: H04N 5/74, G06F 1/26, H04N 9/31

(54) **Image projection apparatus and power control method**

(30) Priority: 15.01.2013 JP 2013004973
(71) Applicant: Ricoh Company, Ltd., Tokyo 104-8222 (JP)
(72) Inventor: Tsuji, Shigekazu, Ohta-ku, Tokyo 143-8555 (JP)
(74) Representative: Maury, Richard Philip

(57) **Abstract**

An image projection apparatus (100, 200) includes: a connection unit (10) to which an external device (101, 210) is to be connected; a light source power supply unit (7) that supplies power to a light source (6); a device power supply unit (12) that supplies drive power via the connection unit (10) to the external device (101, 210); a power acquisition unit (11) that acquires an amount of power to be consumed by the external device (101, 210) when the external device (101, 210) is connected; and a control unit (20) that controls the light source power supply unit (7) to supply, to the light source (6), an amount of power reduced by the amount of power to be consumed by the external device (101, 210) when the external device (101, 210) is connected.

## Description

### CROSS-REFERENCE TO RELATED APPLICATIONS

The present application claims priority to and incorporates by reference the entire contents of Japanese Patent Application No. 2013-004973 filed in Japan on January 15, 2013.

### BACKGROUND OF THE INVENTION

### 1. Field of the Invention

The present invention relates to an image projection apparatus and a power control method.

### 2. Description of the Related Art

Some image projection apparatuses such as projectors of recent years are configured to supply power to a connected peripheral device. One example of such peripheral device is a receiving apparatus of an electronic pen or the like, which acquires information on the position on a screen transmitted from the electronic pen when a letter or a figure is drawn by a user with the electronic pen on an image or picture projected on the screen. Such a receiving apparatus is connected to the projector with a USB cable, for example, and it is supplied with power via the USB. Positional information of the electronic pen received by the receiving apparatus is transmitted to a PC that is connected to the projector, where data input from the electronic pen is combined with image data that is to be projected, and the combined image data is projected from the projector. Another example of a device connected to the projector is a dongle type set-top box connected to an HDMI terminal.

In a case where such a device receives power from a projector, the power that the projector can supply to the device is limited. Japanese Laid-open Patent Publication No. 2009-086223, for example, discloses a technique to reduce power consumption by reducing the size of projected image data by lowering the resolution. Japanese Laid-open Patent Publication No. 2007-305062 discloses a technique to save power by reducing the operating clock frequency of the projector by itself.

These conventional techniques achieve energy saving by reducing the quality of projected image data or the performance.

In view of the circumstance described above, there is a need to realize an image projection apparatus that can reduce power consumption while suppressing reduction of the quality of projected images when there is an external device connected to the image projection apparatus.

### SUMMARY OF THE INVENTION

It is an object of the present invention to at least partially solve the problems in the conventional technology.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a block diagram illustrating the functional configuration of the image projection apparatus in a first embodiment.
FIG. 2 is a diagram illustrating a system configuration example in which the image projection apparatus of the first embodiment is connected to an external device.
FIG. 3 is a diagram illustrating a system configuration example in which the image projection apparatus of the first embodiment is connected to an external device.
FIG. 4 is a flowchart showing the flow of the process steps for determining an amount of power in the image projection apparatus of the first embodiment.
FIG. 5 is a graph showing the relationship between the gradation of input image data and that of output image data of the image projection apparatus of a second embodiment.
FIG. 6 is a graph showing the relationship between the gradation of input image data and that of output image data of the image projection apparatus of the second embodiment.
FIG. 7 is a flowchart showing the flow of the process steps for determining an amount of power in the image projection apparatus of the second embodiment.
FIG. 8 is a flowchart showing the flow of the process steps for determining an amount of power in another example of image projection apparatus of the second embodiment.
FIG. 9 is a perspective view of the front side of the image projection apparatus in which information processing devices of various embodiments are embodied.

### DETAILED DESCRIPTION OF THE PREFERRED EMBODIMENTS

### First Embodiment

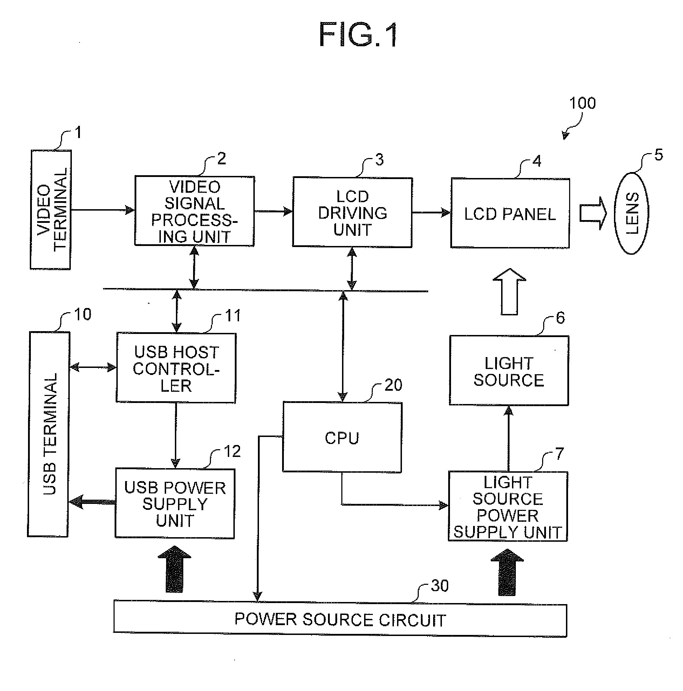

Hereinafter, an image projection apparatus of the present invention embodied as a projector 100 will be described. FIG. 1 is a block diagram illustrating the functional configuration of the projector 100 in this embodiment. The projector 100 includes a video terminal 1, a video signal processing unit 2, an LCD driving unit 3, an LCD panel 4, a projection lens 5, a light source 6, a light source power supply unit 7, a USB terminal 10, a USB host controller 11, a USB power supply unit 12, a CPU 20, and a power source circuit 30.

The video terminal 1 is an input terminal for receiving an input of video data from outside. Examples may include HDMI terminals, S input terminals, and component video terminals. The video signal processing unit 2 carries out various image processing or data conversion on input video data. The LCD driving unit 3 drives the LCD panel 4 based on the video data processed by the video signal processing unit 2. The LCD panel 4 adjusts its angle to direct the light projected from the light source 6 to the lens 5 to form an image. The light source power supply unit 7 supplies power to the light source 6.

The CPU 20 controls the video signal processing unit 2, the LCD driving unit 3, a USB host controller 11, a power source circuit 30, and a light source power supply unit 7 connected on a bus. The CPU 20 corresponds to a control unit.

The projector 100 in this embodiment can project an image input from an external device such as a PC, a DVD player, or a set-top box. These external devices are to be connected to the video terminal 1. The video signal processing unit 2 performs contrast adjustment, brightness adjustment, sharpness adjustment, scaling, and superimposition of a menu display, and/or other operations on the video data input from an external device. The projector 100 may use any projection methods such as an LCD method or a DLP (Digital Light Processing) method that uses a digital mirror device (DMD). The LCD method will be described as one example in this embodiment. The LCD panel 4 uses three primary colors of red (R), green (G), and blue (B). The LCD driving unit 3 converts a video signal processed by the video signal processing unit 2 into an RGB video signal for driving the LCD panel 4. The LCD panel 4 is disposed to transmit light emitted from the light source 6 in the projector 100 to form an image based on the input video signal and to project this image through the projection lens 5 to the outside of the projector 100. The light intensity of the light source 6 is changed by controlling the light source power supply unit 7 with the CPU 20. The more the light amount of the lamp is, the higher the power consumption of the projector 100 is. For example, when the lamp emits a maximum amount of light, the power consumption of the light source 6 takes up about 80% of that of the entire projector 100. The light source power supply unit 7 is supplied with power from the power source circuit 30. The CPU 20 controls the power source circuit 30 to start power supply to various parts when it detects a depression of a power button provided to the projector 100.

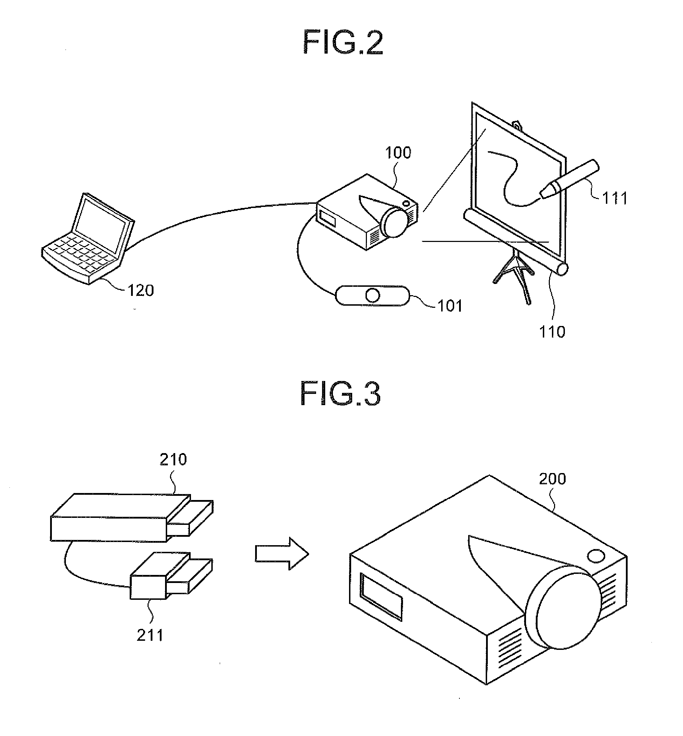

The projector 100 can also project video data stored in a USB memory connected to the USB terminal 10. The projector 100 has a function of projecting an image directly from a USB device, which is called "USB On-The-Go", and acts as the USB host, so that it can read out video data from the USB memory. The USB host controller 11 detects that a USB device is connected to a USB terminal 10, whereupon the USB power supply unit 12 supplies power to the external device connected to the USB terminal 10. That is, the USB terminal 10 and USB power supply unit 12 in this embodiment correspond to a connection unit and a device power supply unit, respectively. The USB power supply unit 12 is supplied with power from the power source circuit 30. One example of the external device connected to the USB terminal 10 is a receiving apparatus that receives operation of an electronic pen. FIG. 2 shows a configuration example of an interactive operation system that uses this receiving apparatus.

As shown in FIG. 2, when a letter or a figure is drawn on the screen 110 with the electronic pen 111, the receiving apparatus 101 connected to the USB terminal 10 of the projector 100 receives information on the position transmitted from the electronic pen 111. The projector 100 sends the received positional information to the PC 120. The positional information may be transmitted from the projector 100 to the PC 120 either through a wireless communication channel or a USB connection. The PC 120 superimposes trajectory data of the pen based on the positional information received from the projector 100 on the signal of the image to be projected, and outputs the signal to the video terminal 1 of the projector 100, which then projects this video signal. The system thus achieves an interactive function.

In this configuration example, the projector 100 is a ultra-short-focus projector and the positional information from the electronic pen 111 should preferably be received at a position close to the screen 110. Therefore, the receiving apparatus 101 is supplied with power from the projector 100 via the USB terminal 10.

Another example of an external device that can be connected to the projector 100 is a dongle type set-top box connected to an HDMI terminal, which is shown in FIG. 3. As shown in FIG. 3, the dongle type set-top box 210 having the HDMI terminal is connected to the video terminal 1 of the projector 200, while the USB connector 211 for supplying power to the set-top box is connected to the USB terminal 10 of the projector 200. The set-top box 210 receives terrestrial broadcasting or an image distributed via a wireless network and outputs the video signal thereof to the projector 200. The projector 200 then projects the image based on the input video signal.

The external devices shown in FIG. 2 and FIG. 3 are supplied with power from the projectors 100 and 200, respectively, via the USB terminal 10. The projector 100 or 200, which is the USB host, supplies power to the connected external device in accordance with the USB standard. The power source circuit 30 of the host (here, the projector) has a limited power supply capacity and cannot supply power more than its limit. The USB standard allows the host to refuse to supply power to a USB device if there is no surplus of power in the host. That, however, may lead to a case where the USB device cannot be used. Therefore, there is a need for a scheme for saving energy or reducing power consumption in the host when a USB device that demands power is connected. The scheme will be described below. The projector 100 also supports a USB hub, and deals with the USB hub connected to the USB terminal 10 of the projector 100 in accordance with the USB standard. Therefore, a plurality of USB devices can be connected to the projector via the USB hub.

The USB host controller 11 (power acquisition unit) acquires information on the capacity of the external device in the enumeration phase where the external terminal is identified when connected to the projector 100 by USB connection. The acquired capacity information also includes the amount of power the external device requires. This amount of power may indicate the maximum amount of power of the external device, or selected one of several levels of power consumption if the external device is capable of adjusting the power consumption stepwise. An external device can draw a maximum of 500 mA from the host according to the USB 2.0 specification, and 900 mA according to the USB 3.0 specification. As the USB standard supplies a voltage of +5 V, a USB 2.0 device can consume a maximum of 2.5 W power, and a USB 3.0 device can consume a maximum of 4.5 W power. The projector 100 consumes the maximum proportion of power in the light source 6, as mentioned above. Although it depends on the type of the projector, the light source 6 can use up to 80% of power of the entire projector. If the brightness of the projector is about 2500 lumens, the entire projector can consume about 250 W power. In this case, about 200 W would be consumed by the light source 6. The CPU 20 allocates about 2.5 to 4.5 W out of 200 W that is consumed by the light source 6, to supply power to the external device. The lamp brightness will lower about 1.25 to 2.25% by the reduced amount of power, which is hardly perceptible to the eye, and therefore has hardly any impact on the quality of projected image.

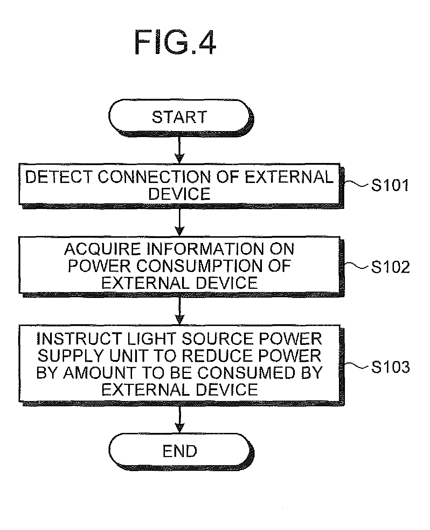

The higher the projector's maximum brightness (e.g., 5000 lumens) is, the smaller the ratio of the brightness reduction due to the power supply to the external device will be, and hence its impact is more negligible. The projector 100, which is the host, detects in the enumeration phase that an external device that demands power is connected, and reduces the amount of power supplied to the light source 6 by the amount of power to be consumed by the external device. This control is performed by the CPU 20 to the light source power supply unit 7. FIG. 4 shows the flow of this process. As shown in FIG. 4, first, the USB host controller 11 detects that an external device is connected to the USB terminal 10 (step S101). The USB host controller 11 then acquires information on the maximum amount of power to be consumed from the connected external device (step S102). This information on the maximum amount of power consumption is stored in the external device in advance in a format supported by the USB standard so that it is available to the host via USB. The CPU 20 then instructs the light source power supply unit 7 to reduce the power of the light source by an amount of power corresponding to the maximum power consumption of the external device (step S103).

The projector 100 of this embodiment, as described above, acquires information on the maximum amount of power to be consumed by the connected external device when an external device that draws power through the USB terminal 10 is connected, and reduces the power to the light source 6 by the amount of the maximum power consumption of the external device. Since a large amount of power is supplied to the light source 6, the reduction in power by the amount necessary for driving the external device only slightly affects the brightness in practice. Thus the external device can be supplied with power appropriately while suppressing reduction of the quality of the image or the performance of the projector 100.

### Second Embodiment

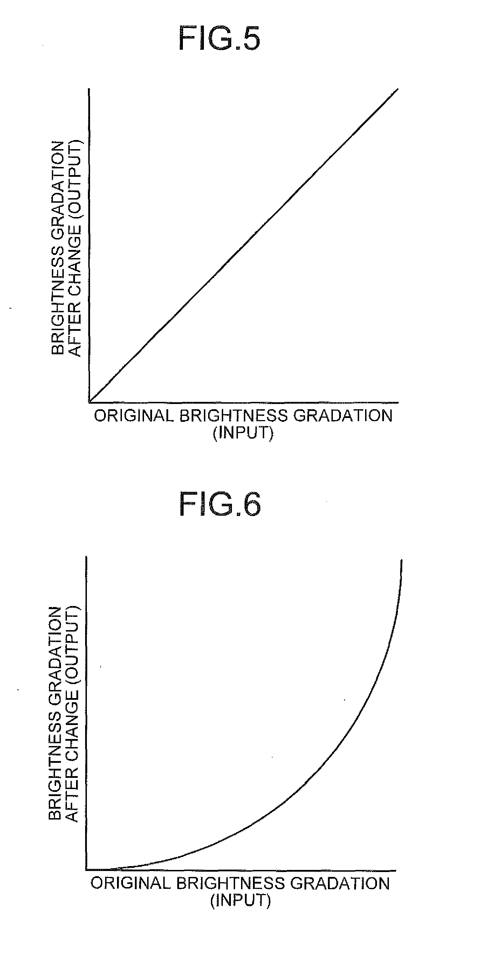

The second embodiment differs from the first embodiment in that the amount of power supplied to the external device is compensated for by further reducing the power consumption of the light source 6. More specifically, the video signal processing unit 2 performs an operation to vary the brightness level of the video data input from the video terminal 1. The brightness level may be varied by, for example, gamma correction carried out in the video signal processing unit 2. Gamma correction defines the brightness level of video data to be output relative to the brightness level (gradation) of the input original video data. FIG. 5 shows a case where the brightness level of input video data and that of output video data are equivalent and no correction is performed. With gamma correction to the input video data, the brightness level of the output video data will be reduced relative to the brightness level of the input video data, as shown in FIG. 6. When the brightness level of the output video data is reduced, the power consumption required for the light source 6 will also decrease.

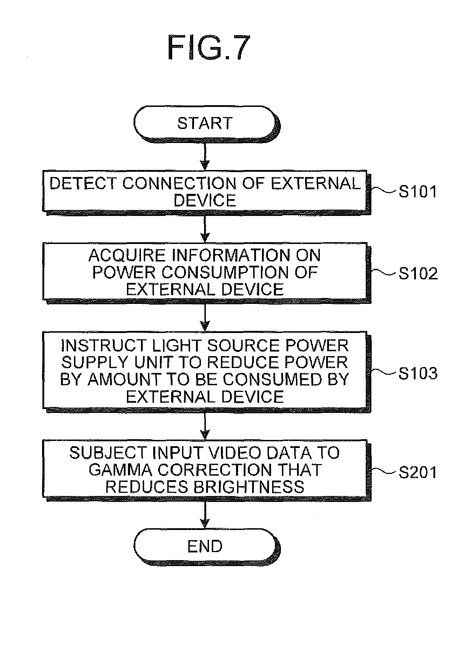

The flow of the process will be described in detail with reference to FIG. 7. Process steps S101 to S103 in FIG. 7 are the same as those shown in FIG. 4 and will not be described again. As shown in FIG. 7, after the process of step S103, the video signal processing unit 2 performs a gamma correction process that reduces the brightness, on the input video data (step S201). By reducing the brightness, the power consumption of the light source 6 can further be reduced.

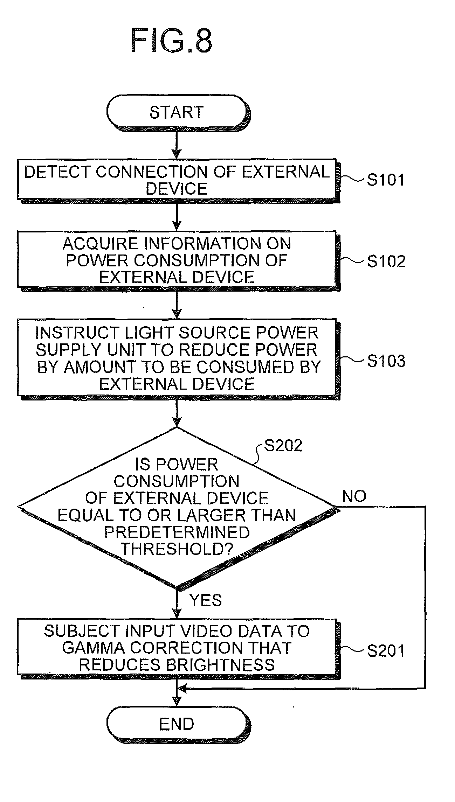

This gamma correction process may be performed in accordance with a predetermined standard instead of being carried out to all the input video data. For example, the gamma correction process may be performed when the amount of power for the light source 6 reduced by the power supply to the external device becomes equal to or smaller than a predetermined threshold, i.e., when the power consumption of the external device becomes equal to or larger than a predetermined threshold. The threshold may be 500 mA, for example, which is the standard power for USB devices. Since reducing the light amount of the light source 6 may apparently lower overall brightness, the brightness level is adjusted by gamma correction only when the power supply to the light source 6 is equal to or smaller than the predetermined threshold, thereby to save energy. FIG. 8 shows the flow of the process in this case. The process steps in FIG. 8 that are the same as those of FIG. 4 and FIG. 7 are given the same reference numerals and will not be described again. As shown in FIG. 8, in step S202 whether or not the acquired data of the power consumption of the external device indicates that the power consumption is equal to or larger than a predetermined threshold is determined. If the power consumption is equal to or larger than the predetermined threshold (YES at step S202), the gamma correction process is performed.

At the determination in FIG. 8, if a plurality of external devices are connected to the USB terminal 10, the decision may be made based on whether or not the sum of the respective power consumptions of the connected external devices, and not the individual power consumption, is equal to or larger than the predetermined threshold.

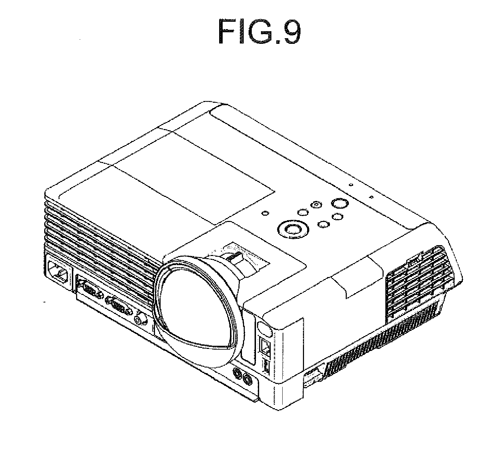

FIG. 9 is a diagram illustrating one example of the shape of the projector 100. The drawing shows a perspective view of the front side of the image projection apparatus.

While power is supplied via the USB terminal 10 in the embodiments described above, power can be supplied via another connection unit.

The embodiment provides the effect of reducing power consumption while suppressing reduction of the quality of projected image.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. An image projection apparatus (100, 200) comprising:
a connection unit (10) to which an external device (101, 210) is to be connected;
a light source power supply unit (7) that supplies power to a light source (6);
a device power supply unit (12) that supplies drive power via the connection unit (10) to the external device (101, 210);
a power acquisition unit (11) that acquires an amount of power to be consumed by the external device (101, 210) when the external device (101, 210) is connected; and
a control unit (20) that controls the light source power supply unit (7) to supply, to the light source (6), an amount of power reduced by the amount of power to be consumed by the external device (101, 210) when the external device (101, 210) is connected.

2. The image projection apparatus (100, 200) according to claim 1, further comprising a video signal processing unit (2) that performs, on input video data, image processing that reduces brightness, and wherein
the control unit (20) controls the video signal processing unit (2) to perform, on the input video data, the image processing that reduces brightness when the external device (101, 210) is connected.

3. The image projection apparatus (100, 200) according to claim 2, wherein the control unit (20) controls the video signal processing unit (2) to perform, on the input video data, the image processing that reduces brightness when the external device (101, 210) is connected and when the acquired amount of power consumed by the external device (101, 210) is equal to or larger than a predetermined threshold.

4. The image projection apparatus (100, 200) according to claim 3, wherein
a plurality of the external devices (101, 210) are connected to the connection unit (10), and
the control unit (20) controls the video signal processing unit (2) to perform, on the input video data, the image processing that reduces brightness when the external devices (101, 210) are connected and when a sum of the respectively-acquired amounts of power consumed by the external devices (101, 210) is equal to or larger than a predetermined threshold.

5. A power control method of an image projection apparatus (100, 200), the image projection apparatus (100, 200) including:
a connection unit (10) to which an external device (101, 210) is to be connected;
a light source power supply unit (7) that supplies power to a light source (6);
a device power supply unit (12) that supplies drive power via the connection unit (10) to the external device (101, 210);
a power acquisition unit (11) that acquires an amount of power to be consumed by the external device (101, 210) when the external device (101, 210) is connected; and
a control unit (20) that controls power supplied to the light source (6), the power control method comprising:
a detecting step of detecting that the external device (101, 210) is connected; and
a controlling step of controlling the light source power supply unit (7) to supply, to the light source (6), an amount of power reduced by the amount of power to be consumed by the external device (101, 210) when it is detected that the external device (101, 210) is connected.
